# EUROPÄISCHE PATENTSCHRIFT

(11) **EP 0 929 793 B1**
(45) Veröffentlichungstag und Bekanntmachung des Hinweises auf die Patenterteilung: **24.07.2002**
(21) Anmeldenummer: 97942768.9
(22) Anmeldetag: 02.09.1997
(51) Int. Cl.: G01B 21/08, G01B 11/06, G01J 5/04

(54) **VERFAHREN ZUR MESSUNG DER SCHLACKENSCHICHTDICKE AUF EINER METALLSCHMELZE SOWIE ZUR DURCHFÜRUNG DES VERFAHRENS GEEIGNETE VORRICHTUNG**
METHOD TO MEASURE SLAG LAYER THICKNESS ON A MOLTEN BATH AND APPROPRIATE DEVICE FOR USE OF SAID METHOD
PROCEDE POUR MESURER L'EPAISSEUR DE LA COUCHE DE SCORIES SUR UNE MASSE DE METAL EN FUSION, ET DISPOSITIF POUR LA MISE EN OEUVRE DE CE PROCEDE

(30) Priorität: 02.10.1996 DE 19640723
(43) Veröffentlichungstag der Anmeldung: 21.07.1999
(73) Patentinhaber: Specialty Minerals Michigan Inc., Bingham Farms, Michigan 48025 (US)
(72) Erfinder: MACH, Johannes, D-47506 Neukirchen-Vluyn (DE); KIRCHHOFF, Stefan, D-44287 Dortmund (DE); BRAUN, Uwe, D-79295 Sulzburg (DE)
(74) Vertreter: Kluin, Jörg-Eden, Dr. Dipl.-Phys.
(86) Internationale Anmeldenummer: DE9701914
(87) Internationale Veröffentlichungsnummer: WO9814755

(56) Entgegenhaltungen:
- EP-A- 0 245 010
- PATENT ABSTRACTS OF JAPAN vol. 10, no. 322 (P-511), 31.Oktober 1986 & JP 61 128103 A (ASAHI GLASS CO. LTD.), 16.Juni 1986,
- PATENT ABSTRACTS OF JAPAN vol. 11, no. 194 (P-588) [2641] , 23.Juli 1987 & JP 62 019727 A (JAPAN SENSAA CORP. K.K.), 28.Januar 1987,

## Beschreibung

Die Erfindung bezieht sich auf ein Verfahren zur Messung der Schlackenschichtdicke auf einer Metallschmelze sowie auf eine Vorrichtung zur Messung der Schlackenschichtdicke auf einer Metallschmelze gemaß dem Oberbegriff des Anspruchs 9.

Einer der wichtigsten Parameter zur gezielten Schlackenkonditionierung ist neben deren Zusammensetzung die absolute Menge der Schlacke, die bei bekannter Oberfläche der Stahlschmelze durch Messung der Schlackenschichtdicke bestimmbar ist.

Aus einem u.a. Badspiegel- und Schlackendickenmessungen betreffenden Prospekt der Firma Provac AB, Enköping, Schweden ist ein Verfahren zur Messung der Schlackenschichtdicke bekannt, bei dem ein Sensor aus einer Position oberhalb der Schlackenoberfläche durch dieselbe hindurch bis in die Metallschmelze verlagert wird, der an seiner unteren Stirnseite ein Thermoelement und zu diesem in Längsrichtung des Sensors beabstandet an seiner Mantelfläche eine Einrichtung zur Messung der Sauerstoffaktivität aufweist. Beim eigentlichen Meßvorgang, der durch das Hineintauchen des Sensors aus einer Position oberhalb der Schlackenschicht bis in die Metallschmelze unter Bestimmung der momentanen Sensorposition erfolgt, signalisiert das an der Stirnseite des Sensors befindliche Thermoelement den Eintritt desselben in die Schlackenschicht, wodurch der Spiegel der Schlackenschichtoberfläche bestimmt wird. Die Grenzfläche zwischen der Schlackenschicht und der Metallschmelze wird durch ein zweites Signal, welches in der Einrichtung zur Messung der Sauerstoffaktivität beim Durchtritt durch die Grenzfläche erzeugt wird, detektiert und die Schlackenschichtdicke aus der Differenz der beiden gemessenen Höhen ermittelt.

Nachteilig ist bei dem Verfahren, daß wegen der Trägheit der verwendeten Meßsensoren die Übergänge zwischen Luft und Schlacke bzw. zwischen Schlacke und Metallschmelze nur dann scharf bestimmbar sind, wenn der Sensor extrem langsam durch die Schlackenschicht hindurchbewegt wird bzw. andererseits bei Aufwendung vertretbarer Meßzeiten eine gewisse Unsicherheit durch die nicht scharfen Übergänge hinsichtlich der Lage der Grenzflächen besteht. Weiterhin ist von Nachteil, daß der Sensor aufgrund der in ihm benötigten verschiedenen Meßeinrichtungen relativ aufwendig und teuer in seiner Herstellung ist.

Es ist daher die Aufgabe der vorliegenden Erfindung, ein Verfahren zur Ermittlung von Schlackenschichtdicken anzugeben, welches eine schnelle und genaue Bestimmung einer Schlackenschichtdicke ermöglicht. Es ist eine weitere Aufgabe der Erfindung, eine Vorrichtung zu schaffen, mit der dieses Verfahren durchführbar ist und welche durch einen einfachen, preiswerten Aufbau auszeichnet.

Diese Aufgaben werden durch das in Anspruch 1 wiedergegebene Verfahren bzw. durch die in Anspruch 9 wiedergegebene Vorrichtung gelöst.

Der Grundgedanke besteht bei dem erfindungsgemäßen Verfahren darin, eine mit einem optischen Meßkopf ausgerüstete Sonde, wie sie beispielsweise aus der EP 0 245 010 A2 zur Messung der Temperatur einer Metallschmelze bekannt ist, aus einer Position oberhalb des Schlackenspiegels durch die Schlackenschicht hindurch bis in die Metallschmelze hinein- und wieder herauszubewegen, hierbei die Position der Sonde zu registrieren und als Meßgröße die unterschiedlichen optischen Eigenschaften von Schmelze, Schlacke und Luft und/oder durch die unterschiedlichen Temperaturverläufe in der Schmelze, der Schlacke und der Luft pyrometrisch zu messen, um die Übergänge Schmelze-Schlacke und Schlacke-Luft zu registrieren. Durch Zuordnung der registrierten Übergänge mit der jeweils von der Sonde erreichten Position ist somit die Schlackenschichtdicke bestimmbar.

Ein wesentlicher Vorteil dieses Verfahrens liegt einerseits darin, daß aufgrund der optischen Messung das Meßverfahren quasi trägheitsfrei abläuft und hierdurch zuverlässige Schlackenschichtdickemessungen auch bei hohen Verlagerungsgeschwindigkeiten des Sensors durchführbar sind. Andererseits können durch die aufgrund des trägheitsfreien Meßverfahrens exakt bestimmbaren Übergänge Schmelze-Schlacke und Schlacke-Luft auch kleine Schlackenschichtdicken präzise bestimmt werden. Darüberhinaus gehören optische Sensoren zu elektronischen Standardbauteilen, so daß ein für die Anwendung des Verfahrens geeigneter Meßsensor preisgünstig herstellbar ist.

Versuche haben gezeigt, daß die Grenzflächen Schmelze-Schlacke sowie Schlacke-Luft besonders präzise detektierbar sind, wenn die Sonde zunächst aus der Luft bis in die Metallschmelze hineinverlagert wird und der eigentliche Meßvorgang beim Herausfahren der Sonde aus der Schmelze bis in die Luft erfolgt.

Besonders einfach im Aufbau kann der Sensor gehalten werden, wenn während des Meßvorgangs die pyrometrische Temperatur aufgenommen wird, d.h. zur Ermittlung der Grenzschichten die unterschiedlichen Emmissivitäten von Schmelze, Schlacke und Luft gemessen werden (Anspruch 3).

Es ist jedoch ebenfalls möglich, das Reflexionsvermögen der zwischen dem Sensor und dem jeweiligen Medium Schmelze, Schlacke und Luft gebildeten Oberflächen zu messen (Anspruch 4).

Besonders vorteilhaft ist es dann, gemäß Anspruch 5 Lichtpulse auf die jeweils gebildete Oberfläche zu leiten.

Ein besonders einfaches Verfahren zur Ermittlung der Sondenposition ist Gegenstand der Ansprüche 6 und 7. Bei diesem wird die Sonde mit konstanter, vorgegebener Geschwindigkeit durch die Schlackenschicht hindurch in die Metallschmelze hinein- und aus dieser wieder herausbewegt.

Die Genauigkeit des Meßverfahrens läßt sich abermals erhöhen, wenn gemäß Anspruch 8 die erste Ableitung der Meßgröße nach der Zeit als Funktion der Zeit bestimmt wird. Durch diese Maßnahme wird erzielt, daß sprunghafte Änderungen der Meßgröße als scharfe Peaks, Änderungen der Meßgröße als Funktion der Lage des Sensors, bei einem Verfahren gemäß den Ansprüchen 6 und 7 als Funktion der Zeit durch eine Abweichung der ersten Ableitung der Meßgröße nach der Zeit vom Wert 0 erkennbar werden.

Eine Vorrichtung zur Messung der Schlackenschichtdicke auf einer Metallschmelze nach dem erfindungsgemäßen Verfahren ist Gegenstand des Anspruchs 9. Die bei dieser vorgesehene Sonde umfaßt einen Meßkopf, der mit Mitteln zur Messung der Intensität von im optischen Wellenlängenbereich liegender elektromagnetischer Strahlung ausgestattet ist. Dadurch, daß die Vorrichtung des weiteren Mittel umfaßt, mit der die jeweilige Eindringtiefe der Sonde in dem metallurgischen Gefäß bestimmbar und der Sonde eine Auswerteelektronik nachgeschaltet ist, die den gemessenen Intensitätswert als Funktion der Eindringtiefe ermittelt, sind Änderungen des Meßwerts als Funktion der Eindringtiefe während des Meßvorgangs registrierbar und es kann somit die Schlackenschichtdicke unmittelbar bestimmt werden.

Eine bevorzugte Ausführungsform der erfindungsgemäßen Vorrichtung ist Gegenstand des Anspruchs 9. Diese umfaßt zur Messung der Reflexivität des Mediums, in dem sich die Sonde gerade befindet, eine Einleitung von Lichtpulsen in eine mit dem Mittel zur Messung der Intensität gebildeten Oberfläche.

Vorzugsweise sind die Mittel zur Messung der Intensität der elektromagnetischen Strahlung ein Lichtleiter, dessen eines Ende in Berührung mit dem Medium, in welchem die Intensität gemessen werden soll, bringbar ist und dessen weiteres Ende an ein lichtsensitives elektronisches Element angekoppelt ist (Anspruch 11).

Besonders preisgünstig ist der Sensor dann, wenn der Lichtleiter gemäß Anspruch 12 ein Quarzstab ist.

Bei einer ersten bevorzugten Ausführungsform ist gemäß Anspruch 13 das lichtsensitive elektronsiche Element in dem Meßkopf vorgesehen. Es ist dann besonders von Vorteil, wenn es direkt optisch an den Lichtleiter angekoppelt ist.

Bei einer anderen bevorzugten Ausführungsform ist das lichtsensitive elektronische Element außerhalb des Meßkopfes vorgesehen und mit dem Lichtleiter über einen Lichtwellenleiter optisch verbunden (Anspruch 15). Eine besonders hohe Ortsauflösung ist mit dem Sensor erzielbar, wenn gemäß Anspruch 16 der lichtsensitive Bereich der Mittel zur Messung der Intensität an der Stirnseite des Meßkopfes vorgesehen ist.

Bei einer weiteren bevorzugten Ausführungsform der erfindungsgemäßen Vorrichtung bestehen die Mittel zur Messung der Intensität aus mehreren Lichtleitern, die jeweils mit einem lichtsensitiven, elektronischen Element gekoppelt sind. Die lichtsensitiven Bereiche der Lichtleiter sind an der Mantelfläche des Meßkopfes derart angeordnet, daß durch die Anordnung eine zusätzliche Tiefenauflösung bezogen auf die Eindringtiefe des Sensors erzielbar ist. Durch diese Maßnahme kann die Bestimmung der Lage der Grenzflächen Schmelze-Schlacke bzw. Schlacke-Luft nochmals präziser erfolgen.

Besonders preisgünstig in der Herstellung ist der Sensor dann, wenn gemäß Anspruch 18 das lichtsensitive elektronische Element eine Fotodiode ist.

Sind in dem Sensor des weiteren Mittel zum Einleiten von Lichtpulsen vorgesehen, so sind diese vorzugsweise als über einen Lichtwellenleiter mit den Mitteln zur Messung der Intensität gekoppelte Laserdiode ausgebildet (Anspruch 19).

Da die für die Herstellung des Meßkopfes erforderlichen Bauteile allesamt handelsübliche Komponenten sind, deren Bereitstellung nur einen relativ geringen Kostenaufwand erfordert, ist bei einer bevorzugten Ausführungsform der erfindungsgemäßen Vorrichtung der Meßkopf gemäß Anspruch 20 als für den einfachen Gebrauch vorgesehener Einmalmeßkopf ausgebildet. Durch die Verwendung stets neuer Meßköpfe wird gewährleistet, daß Fehlmessungen aufgrund Meßkopfverschleißes praktisch ausgeschlossen sind.

Der Meßkopf ist besonders einfach austauschbar, wenn er die Merkmale des Anspruchs 21 aufweist.

Versuche haben gezeigt, daß besonders präzise Messungen der Schlackenschichtdicke mit einer Sonde möglich sind, die ein äußeres Papprohr umfaßt, dessen Mantelfläche zumindest an dem den Meßkopf tragenden Bereich von einem Spritzschutzrohr umgeben ist. Durch diese Ausgestaltung wird sichergestellt, daß die Grenzfläche zwischen der Metallschmelze und der Schlacke nicht durch durch das Einführen der Sonde hervorgerufene Mischvorgänge beeinträchtigt wird, was zwangsläufig die mit der erfindungsgemäßen Vorrichtung erzielbare Meßgenauigkeit negativ beeinflussen würde.

Einfach durchzuführen ist die Schlackenschichtdickenmessung dann, wenn die Vorrichtung die Merkmale des Anspruchs 23 aufweist.

Besonders variabel in ihrem Einsatzbereich ist die Sonde dann, wenn in dieser zusätzlich eine Vorrichtung zur Temperaturmessung vorgesehen ist (Anspruch 24).

In der Zeichnung ist anhand der in Fig. 1a und b dargestellten Diagramme die Wirkungsweise des erfindungsgemäßen Verfahrens zur Schlackenschichtdickenmessung sowie in den Fig. 2 bis 6 zwei Ausführungsformen der erfindungsgemäßen Vorrichtung grafisch dargestellt.

Es zeigen:
Fig. 1a die mit einem optischen Meßkopf aufgenommene pyrometrische Temperatur in relativen Einheiten, wobei der Meßkopf zunächst aus einer Position über dem Schlackenspiegel durch die Schlacke hindurch bis in die Metallschmelze eingetaucht und anschließend mit konstanter Geschwindigkeit wieder bis in eine Position über dem Schlakkenspiegel herausgefahren wurde, als Funktion der Zeit;
Fig. 1b die erste Ableitung nach der Zeit der bei der Messung gemäß Fig. la aufgenommenen pyrometrischen Temperatur als Funktion der Zeit;
Fig. 2 einen Längsschnit durch eine erste Ausführungsform eines Meßkopfes einer erfindungsgemäßen Vorrichtung;
Fig. 3 einen zur Montage dieses Meßkopfes an einer Sonde geeigneten Adapter;
Fig. 4 eine weitere Ausführungsform eines Meßkopfes einer erfindungsgemäßen Vorrichtung;
Fig. 5 den Adapter zur Montage dieses Meßkopfes an einer Meßsonde sowie
Fig. 6 einen Längsschnitt durch eine mit einem Meßkopf versehene Sonde.

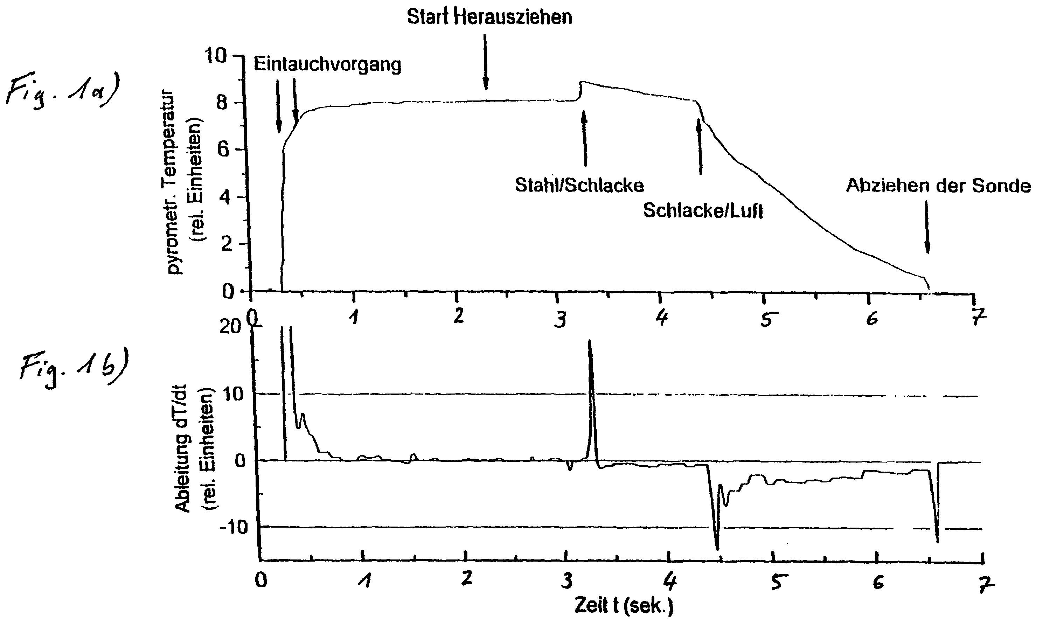

Bei dem in Fig. 1a grafisch dargestellten Ablauf des erfindungsgemäßen Verfahrens wurde die bei einem Meßvorgang mit Hilfe des optischen Meßkopfes pyrometrische Temperatur als Funktion der Zeit aufgenommen. Der Meßkopf wurde zunächst aus einer Position oberhalb des Schlackenspiegels bis in die Metallschmelze hineinverlagert, was an dem Diagramm dadurch erkennbar ist, daß sich die pyrometrische Temperatur nicht mehr mit der Zeit ändert, d.h. in dem dargestellten Diagramm ein Plateau erreicht wird.

Der eigentliche Meßvorgang findet beim Herausbewegen der Meßsonde aus der Metallschmelze bis an eine oberhalb des Schlackenspiegels befindliche Position statt, welches - zur Bestimmung der jeweiligen Position der Meßsonde über die verstrichene Zeit - mit vorbestimmter, konstanter Geschwindigkeit erfolgt.

Bei der in Fig. la dargestellten Messung ist der Übergang Metallschmelze-Schlacke deutlich durch den sprunghaften Anstieg der gemessenen pyrometrischen Temperatur erkennbar, welcher dadurch zustande kommt, daß die Emissivität der Schlacke von der jenigen der Metallschmelze verschieden ist. Die sich daran anschließende stetige Abnahme der pyrometrischen Temperatur beim Durchfahren der Schlackenschicht kommt durch die Abnahme der Temperatur in Richtung des Schlackenspiegels zustande. Verantwortlich für diese Temperaturabnahme ist die relativ schlecht Wärmeleitfähigkeit der Schlacke im Vergleich zur Metallschmelze.

Erreicht die Sonde die Grenzfläche Schlacke-Luft, so erfolgt eine etwa exponentielle Abnahme der pyrometrischen Temperatur mit der Zeit, was auf die ebenfalls exponentielle Abnahme der Temperatur in der Luftschicht oberhalb des Schlackenspiegels zurückzuführen ist.

In Fig. 1b ist für die in Fig. la dargestellte Messung die erste Ableitung der pyrometrischen Temperatur nach der Zeit als Funktion der Zeit dargestellt. Deutlich erkennbar sind die scharfen Peaks beim Durchlaufen des Meßkopfes durch die Grenzflächen Metallschmelze-Schlacke und Schlacke-Luft, die durch die sprunghaften Änderungen der gemessenen pyrometrischen Temperatur an diesen Stellen zustande kommt.

Des weiteren ist deutlich erkennbar, daß in dem zeitlichen Bereich, in dem der Meßkopf durch die Schlackenschicht hindurchbewegt wird, die Ableitung der pyrometrischen Temperatur nach der Zeit stets signifikant negativ ist. Durch diesen Effekt ist gewährleistet, daß mit Hilfe des erfindungsgemäßen Verfahrens auch Schlackenschichtdicken präzise bestimmbar sind, wenn die Emissivität von Schlacke und Metallschmelze übereinstimmen.

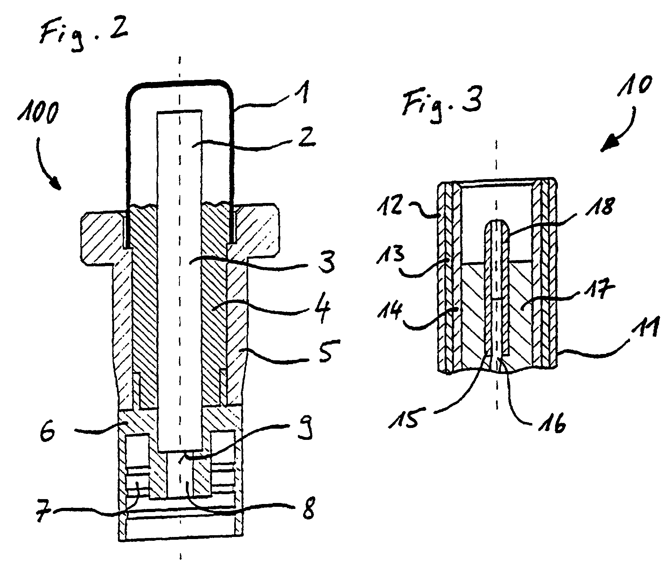

Im folgenden soll nun anhand der Fig. 2 bis 6 eine zur Durchführung des erfindungsgemäßen Verfahrens geeignete Vorrichtung erläutert werden.

Die Vorrichtung umfaßt einen optischen Meßkopf 100, welcher der Aufnahme elektromagnetischer, im optischen Wellenlängenbereich liegender Strahlung dient. Der Meßkopf umfaßt eine vorzugsweise aus einem der Metallschmelze entsprechenden Material hergestellte Kappe 1. Sie umschließt das aus der Stirnseite des Meßkopfes 100 herausragende Ende 2 eines Lichtleiters 3, welcher mit Hilfe von Feuerfestzement 4 in einem Keramikmantel 5 verankert ist.

Die Kappe 1 hat die Aufgabe zu verhindern, daß das Ende 2 des Lichtleiters 3 beim Einfahren der Sonde durch die Schlackenschicht in die Schmelze durch die Schlacke benetzt wird, was seine optische Sensivität beeinträchtigen würde. In der Metallschmelze schmilzt die Kappe auf, so daß die Messung der pyrometrischen Temperatur mit einem unbenetzten Lichtleiter erfolgen kann.

Der Keramikmantel 5 und der Lichtleiter 3 sind mit einer Adapterhülse 6 verkittet, welche Ausnehmungen 7 zur Festlegung an dem Ende eines an einem stabförmigen Meßsondenteil 10 vorgesehenen Adapters 11 dient.

Des weiteren umfaßt die Adapterhülse 6 eine zentrale Bohrung 8, die bis an die Stirnseite des eingesetzten Lichtleiters 3 ragt.

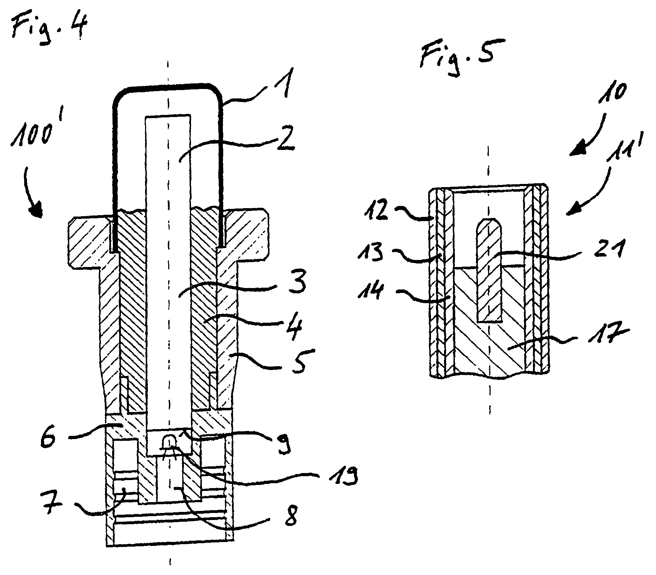

Der in Fig. 3 - ausschnittsweise - dargestellte Adapter 11 umfaßt eine Stahlhülse 12, in die ein der Isolierung dienendes Kunststoffrohr 13 eingepaßt ist, welches auf seinem Innenumfang wiederum ein Kupferrohr 14 trägt.

In Längsrichtung nach innen versetzt ist ein von einer Fassung 15 umgebener Lichtwellenleiter 16 mit Hilfe eines Kunststoffeinsatzes 17 derart zentral in dem Adapter 11 angeordnet, daß sein vorderes Ende 18 den Kunststoffeinsatz überragt und bei aufgeschobenem Meßkopf 100 an der hinteren Stirnseite 9 des Lichtleiters 3 anliegt.

Als lichtsensitives elektronisches Element dient eine in der Zeichnung nicht dargestellte Fotodiode, mit der der Lichtwellenleiter 16 optisch verbunden ist. Die Fotodiode kann in einer ebenfalls in der Zeichnung nicht dargestellten Lanze zur Aufnahme des Adapters 11 und des Meßkopfes 100 untergebracht sein.

Eine weitere Ausführungsform des Meßkopfes einer erfindungsgemäßen Anordnung ist in Fig. 4 dargestellt. Im Unterschied zu dem oben beschriebenen ist bei diesem die als lichtsensitives elektronsiches Element dienende Fotodiode 19 in der Adapterhülse 6 angeordnt und mit Hilfe eines optischen Kitts 20 an die hintere Stirnseite 9 des Lichtleiters 3 optisch angekoppelt.

Im übrigen entspricht der Aufbau dieses Meßkopfes demjenigen des anhand von Fig. 2 beschriebenen.

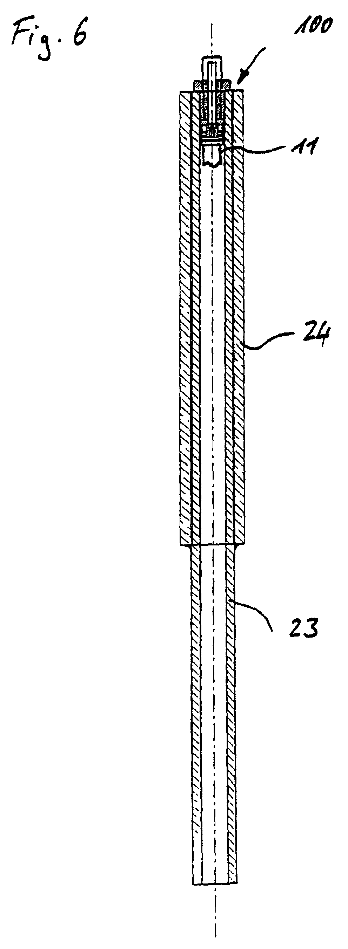

In Fig. 5 ist der Adapter 11' zur Anbringung des Meßkopfes gemäß Fig. 4 dargestellt. Im Unterschied zum Adapter 11 gemäß Fig. 3 trägt der Kunststoffeinsatz 17 einen elektrischen Adapter 21, welcher mit den Anschlüssen 22 der Fotodiode 19 beim Aufsetzen des Meßkopfes elektrisch verbindbar ist.

Eine aus einem an dem Adapter 11 bzw. 11' montierten Meßkopf 100, im folgenden als "Lanze" 50 bezeichnet, ist in Fig. 6 dargestellt.

Die Lanze umfaßt ein Papprohr 23, welches in seinem vorderen Bereich mit einem Spritzschutzmantel 24, der aus einer Aluminium-Silikat-Faser bestehen kann, umgeben ist. Während eines Meßvorganges ist die Sonde an einer in der Zeichnung nicht dargestellten stabförmigen Lanze befestigt, welche die nötigen optischen und/oder elektrischen Leitungen zur Verbindung des optischen Meßkopfes mit einer in der Zeichnung ebenfalls nicht dargestellten Auswerteelektronik umfaßt.

## Patentansprüche

1. Verfahren zur Messung der Schlackenschichtdicke auf einer Metallschmelze, bei dem
eine mit einem optischen Meßkopf ausgerüstete Sonde durch die Schlackenschichtdicke hindurchbewegt und
die Position der Sonde ermittelt wird,
**dadurch gekennzeichnet,**
**daß** von der Sonde als Meßgröße T die unterschiedlichen optischen Eigenschaften von Schmelze, Schlacke und Luft und/oder die unterschiedlichen Temperaturverläufe in der Schmelze, der Schlacke und der Luft gemessen und somit die Übergänge Schmelze-Schlacke und Schlacke-Luft registriert werden,
und durch die Zuordnung der registrierten Übergänge Schmelze-Schlacke und Schlacke-Luft mit der jeweils von der Sonde erreichten Position die Schlackenschichtdicke ermittelt wird.

2. Verfahren nach Anspruch 1, **dadurch gekennzeichnet, daß** die Bestimmung der Schlackenschichtdicke beim Herausbewegen der Sonde aus der Schmelze durch die Schlackenschicht hindurch bis in eine oberhalb der Schlackenoberfläche befindliche Position erfolgt.

3. Verfahren nach Anspruch 1 oder 2, **dadurch gekennzeichnet, daß** als unterschiedliche Eigenschaften die unterschiedlichen Emmissivitäten von Schmelze, Schlacke und Luft gemessen werden.

4. Verfahren nach Anspruch 1 oder 2, **dadurch gekennzeichnet, daß** als unterschiedliche zwischen der Meßeinrichtung und Schmelze, Schlacke und Luft gebildeten optische Eigenschaften das Reflexionsvermögen der Oberflächen gemessen wird.

5. Verfahren nach Anspruch 4, **dadurch gekennzeichnet, daß** zur Messung des Reflexionsvermögens Lichtpulse auf die jeweilige gebildete Oberfläche geleitet werden.

6. Verfahren nach einem der Ansprüche 1 bis 5, **dadurch gekennzeichnet, daß** die Sonde in die Schmelze eingetaucht und mit konstanter, vorbestimmter Geschwindigkeit aus der Schmelze durch die Schlacke bis über deren Oberfläche herausbewegt wird.

7. Verfahren nach Anspruch 6, **dadurch gekennzeichnet, daß** die Schlackenschichtdicke durch Registrierung der Meßgröße als Funktion der Zeit bestimmt wird.

8. Verfahren nach Anspruch 6, **dadurch gekennzeichnet, daß** die Schlackenschichtdicke durch Ermittlung der ersten Ableitung der Meßgröße nach der Zeit ^{dT}/_{dt} als Funktion von der Zeit t bestimmt wird.

9. Vorrichtung zur Messung der Schlackenschichtdicke auf einer Metallschmelze nach einem Verfahren nach einem der Ansprüche 1 bis 8, mit einer aus einer oberhalb der Schlacke befindlichen Position durch die Schlacke bis in die Metallschmelze hinein- und zurückverlagerbare Sonde, wobei Mittel vorgesehen sind, mit denen die jeweilige Eindringtiefe der Sonde bestimmbar ist,
**dadurch gekennzeichnet,**
**daß** die Sonde einen Meßkopf (100) mit Mitteln zur Messung der Intensität von elektromagnetischer Strahlung in einem bestimmten, im optisch liegenden Wellenlängenbereich umfaßt,
und **daß** der Sonde eine Auswerteelektronik nachgeschaltet ist, die den gemessenen Intensitätswert als Funktion der Eindringtiefe ermittelt.

10. Vorrichtung nach Anspruch 9, **dadurch gekennzeichnet, daß** der Meßkopf Mittel zur Einleitung von Lichtpulsen in eine durch die Mittel zur Messung der Intensität gebildeten Oberfläche umfaßt.

11. Vorrichtung nach Anspruch 9 oder 10, **dadurch gekennzeichnet, daß** die Mittel zur Messung der Intensität ein Lichtleiter (3) sind, dessen eines Ende (2) in Berührung mit dem Medium, in welchem die Intensität gemessen werden soll, bringbar ist und dessen weiteres Ende (3) an ein lichtsensitives elektronisches Element angekoppelt ist.

12. Vorrichtung nach Anspruch 11, **dadurch gekennzeichnet, daß** der Lichtleiter ein Quarzstab ist.

13. Vorrichtung nach Anspruch 11 oder 12, **dadurch gekennzeichnet, daß** das lichtsensitive elektronische Element in dem Meßkopf vorgesehen ist.

14. Vorrichtung nach Anspruch 13, **dadurch gekennzeichnet, daß** das lichtsensitive elektronische Element direkt optisch an dem Lichtleiter angekoppelt ist.

15. Vorrichtung nach Anspruch 11 oder 12, **dadurch gekennzeichnet, daß** das lichtsensitive elektronische Element außerhalb des Meßkopfes vorgesehen und mit dem Lichtleiter über einen Lichtwellenleiter optisch verbunden ist.

16. Vorrichtung nach einem der Ansprüche 9 bis 15, **dadurch gekennzeichnet, daß** der lichtsensitive Bereich der Mittel zur Messung der Intensität an der Stirnseite des Meßkopfes vorgesehen ist.

17. Vorrichtung nach einem der Ansprüche 9 bis 15, **dadurch gekennzeichnet, daß** die Mittel zur Messung der Intensität aus mehreren Lichtleitern und jeweils mit einem derselben optisch gekoppelten lichtsensitiven, elektronischen Elementen bestehen, wobei die lichtsensitiven Bereiche der Lichtleiter an der Mantelfläche des Meßkopfes derart angeordnet sind, daß durch die Anordnung eine zusätzliche Tiefenauflösung bezogen auf die Eindringtiefe erzielbar ist.

18. Vorrichtung nach einem der Ansprüche 11 bis 17, **dadurch gekennzeichnet, daß** das lichtsensitive elektronische Element eine Fotodiode (19) ist.

19. Vorrichtung nach einem der Ansprüche 10 bis 18, **dadurch gekennzeichnet, daß** die Mittel zum Einleiten von Lichtpulsen eine über einen Lichtwellenleiter mit den Mitteln zur Messung der Intensität gekoppelte Laserdiode sind.

20. Vorrichtung nach einem der Ansprüche 9 bis 19, **dadurch gekennzeichnet, daß** der Meßkopf als für den einfachen Gebrauch vorgesehener Einmalmeßkopf ausgebildet ist.

21. Vorrichtung nach einem der Ansprüche 9 bis 20, **dadurch gekennzeichnet, daß** der Meßkopf an einer Stirnseite Mittel zur optischen und/oder elektrischen sowie mechanischen Ankopplung an dem einen Ende einer den Meßkopf während einer Messung tragenden Sonde umfaßt.

22. Vorrichtung nach Anspruch 21, **dadurch gekennzeichnet, daß** die Sonde ein äußeres Papprohr umfaßt, dessen Mantelfläche zumindest an dem den Meßkopf tragenden Bereich von einem Spritzschutzrohr umgeben ist.

23. Vorrichtung nach Anspruch 21 oder 22, **dadurch gekennzeichnet, daß** die Sonde an dem den Meßkopf gegenüberliegenden stirnseitigen Ende mit einer Lanze optisch und/oder elektrisch sowie mechanisch verbunden ist, die die mechanische Verbindung zu einer Vorrichtung zur Absenkung der Sonde in die Schmelze sowie die optische und/oder elektrische Verbindung zu der nachgeschalteten Auswerteelektronik darstellt.

24. Vorrichtung nach einem der Ansprüche 9 bis 23, **dadurch gekennzeichnet, daß** in der Sonde zusätzlich eine Vorrichtung zur Temperaturmessung vorgesehen ist.

## Claims

1. Process for measuring the thickness of a slag layer on a metallic molten mass, wherein a probe fitted with an optical measuring head moves through the thickness of the slag layer and the position of the probe is determined,
**characterised in that**
the various optical properties of the molten mass, slag and air and/or the various temperature characteristics in the molten mass, the slag and the air are measured by the probe as measured parameter T and accordingly the transitions molten mass-slag and slag-air are registered,
and by associating the registered transitions molten mass-slag and slag-air with the position reached in each case by the probe, the thickness of the slag layer is determined.

2. Process according to claim 1, **characterised in that** the measurement of the slag layer thickness is carried out during the withdrawal of the probe from the molten mass through the slag layer into a position located above the surface of the slag.

3. Process according to claim 1 or 2, **characterised in that** the different emissivities of the molten mass, slag and air are measured as different properties.

4. Process according to claim 1 or 2, **characterised in that** the reflection potentials of the surfaces are measured as different optical properties formed between the measuring device and molten mass, slag and air.

5. Process according to claim 4, **characterised in that** in order to measure the reflection potential, light impulses are directed onto the relevant surface formed.

6. Process according to any one of claims 1 to 5, **characterised in that** the probe is immersed in the molten mass and withdrawn at a predetermined constant rate from the molten mass through the slag until it is above its surface.

7. Process according to claim 6, **characterised in that** the slag layer thickness is measured by registering the measured parameter as a function of time.

8. Process according to claim 6, **characterised in that** the slag layer thickness is measured by determining the first derivative of the measured parameter against time ^{dT}/_{dt} as a function of time t.

9. Device for measuring the thickness of a slag layer on a metallic molten mass in accordance with a process according to any one of claims 1 to 8, with a probe which can be displaced from a position located above the slag into the metallic molten mass and back again, wherein means are provided, with which the relevant immersion depth of the probe can be determined,
**characterised in that**,
the probe comprises a measuring head (100) with means for measuring the intensity of electromagnetic radiation in the optical range within a given wavelength range
and that an electronic evaluation circuit is connected in series to the probe and determines the measured intensity value as a function of the depth of immersion.

10. Device according to claim 9, **characterised in that** the measuring head comprises means for introducing light impulses into a surface formed by the means for measuring the intensity.

11. Device according to claim 9 or 10, **characterised in that** the means for measuring the intensity is a light guide (3), of which one end (2) can be brought into contact with the medium in which the intensity is to be measured, and the other end (3) is connected to a light-sensitive electronic element.

12. Device according to claim 11 **characterised in that** the light guide is a quartz rod.

13. Device according to claim 11 for 12,
**characterised in that** the light-sensitive electronic element is provided in the measuring head.

14. Device according to claim 13, **characterised in that** the light-sensitive electronic element is optically connected directly to the light guide.

15. Device according to claim 11 or 12, **characterised in that** the light-sensitive electronic element is provided outside the measuring head and is optically connected to the light guide via an optical wave guide.

16. Device according to any one of claims 9 to 15, **characterised in that** the light-sensitive region of the means for measuring the intensity is provided on the end face of the measuring head.

17. Device according to any one of claims 9 to 16, **characterised in that** the means for measuring the intensity consist of several light guides and light-sensitive, electronic elements to which each of the said light guides is optically connected, wherein the light-sensitive regions of the light guides are arranged on the casing surface of the measuring head in such a manner that an additional depth resolution relative to the depth of immersion can be achieved through the arrangement.

18. Device according to any one of claims 11 to 17, **characterised in that** the light-sensitive electronic element is a photo-diode (19).

19. Device according to any one of claims 10 to 18, **characterised in that** the means for introducing light impulses is a laser diode connected via an optical wave guide to the means for measuring the intensity.

20. Device according to any one of claims 9 to 19, **characterised in that** the measuring head is a disposable measuring head designed for single use.

21. Device according to any one of claims 9 to 20, **characterised in that** on an end face the measuring head provides means for optical and/or electrical and mechanical connection to one end of a probe which carries the measuring head during a measurement.

22. Device according to claim 21, **characterised in that** the probe comprises an outer cardboard tube, of which the casing surface is surrounded by a splash-protective tube at least in the region carrying the measuring head.

23. Device according to claim 21 or 22, **characterised in that** the probe is connected optically and/or electrically and mechanically at the end opposite the measuring head to a lance, which represents the mechanical connection to a device for lowering the probe into the molten mass and the optical and/or electrical connection to the series-connected electronic evaluation circuit.

24. Device according to any one of claims 9 to 23, **characterised in that** a device for temperature measurement is additionally provided in the probe.

## Revendications

1. Procédé de mesure de l'épaisseur de couche de scories sur une masse fondue métallique, selon lequel
on déplace une sonde équipée d'une tête de mesure optique à travers l'épaisseur de la couche de laitier, et
on détermine la position de la sonde,
**caractérisé en ce que**
la sonde mesure comme grandeur de mesure T les différences de propriétés optiques de la masse fondue, des scories et de l'air et/ou les différences de variations de température dans la masse fondue, les scories et l'air, et enregistre ainsi les transitions masse fondue-scorie et scorie-air,
et on mesure par la mise en relation des transitions masse fondue-scorie et scorie-air enregistrée avec la position atteinte par la sonde, l'épaisseur de la couche de scories.

2. Procédé selon la revendication 1,
**caractérisé en ce que**
la détermination de l'épaisseur de la couche de scorie s'effectue lors de la sortie de la sonde de la masse fondue à travers la couche de scories jusqu'à une position se trouvant au-dessus du niveau des scories.

3. Procédé selon la revendication 1 ou 2,
**caractérisé en ce qu'**
on mesure comme propriétés différentes les différences d'émissivité de la masse fondue, des scories et de l'air.

4. Procédé selon la revendication 1 ou 2,
**caractérisé en ce qu'**
on mesure comme propriétés optiques différentes entre le dispositif de mesure et la masse fondue, les scories et l'air, le pouvoir de réflexion des surfaces.

5. Procédé selon la revendication 4,
**caractérisé en ce que**,
pour la mesure du pouvoir de réflexion, on dirige des impulsions lumineuses sur la surface formée à chaque fois.

6. Procédé selon l'une des revendications 1 à 5,
**caractérisé en ce qu'**
on plonge la sonde dans la masse fondue et on la retire de la masse fondue, à une vitesse constante prédéterminée, à travers les scories jusqu'au dessus de leur surface.

7. Procédé selon la revendication 6,
**caractérisé en ce qu'**
on détermine l'épaisseur de la couche de scories par l'enregistrement de la grandeur mesurée en fonction du temps.

8. Procédé selon la revendication 6,
**caractérisé en ce qu'**
on détermine l'épaisseur de la couche de scories en déterminant la première dérivation de la grandeur mesurée avec le temps dT/dt en fonction du temps t.

9. Dispositif de mesure de l'épaisseur de couche de scories sur une masse métallique fondue selon un procédé d'une des revendications 1 à 8, avec lequel à partir d'une position se trouvant au-dessus des scories, à travers les scories jusque dans la masse métallique fondue, on fait se mouvoir une sonde dans un sens et dans l'autre jusqu'à la masse métallique fondue, dans lequel sont prévus des moyens avec lesquels on peut déterminer la profondeur de pénétration correspondante de la sonde,
**caractérisé en ce que**
la sonde comprend une tête de mesure (100) avec des moyens pour mesurer l'intensité du rayonnement électromagnétique dans un domaine de longueur d'onde déterminé, se situant dans la zone optique, et on dispose à la suite de la sonde une électronique d'évaluation qui détermine la valeur d'intensité mesurée en fonction de la profondeur de pénétration.

10. Dispositif selon la revendication 9,
**caractérisé en ce que**
la tête de mesure comprend des moyens pour apporter des impulsions lumineuses sur une surface formée à travers les moyens de mesure de l'intensité.

11. Dispositif selon la revendication 9 ou 10,
**caractérisé en ce que**
les moyens de mesure de l'intensité sont un guide-lumière 3 dont une extrémité 2 peut être mise en contact avec le milieu dans lequel on doit mesurer l'intensité, et dont l'autre extrémité 3 est couplée à un élément électronique sensible à la lumière.

12. Dispositif selon la revendication 11,
**caractérisé en ce que**
le guide-lumière est une barre de quartz.

13. Dispositif selon la revendication 11,
**caractérisé en ce que**
l'élément électronique sensible à la lumière est prévu dans la tête de mesure.

14. Dispositif selon la revendication 13,
**caractérisé en ce que**
l'élément électronique sensible à la lumière est couplé directement par un moyen optique au guide-lumière.

15. Dispositif selon la revendication 11 ou 12,
**caractérisé en ce que**
l'élément électronique sensible à la lumière est prévu à l'extérieur de la tête de mesure et est relié optiquement au guide-lumière par l'intermédiaire d'un guide d'onde lumineuse.

16. Dispositif selon l'une des revendications 9 à 15,
**caractérisé en ce que**
le domaine sensible à la lumière des agents de mesure de l'intensité est prévu sur le côté frontal de la tête de mesure.

17. Dispositif selon l'une des revendications 9 à 15,
**caractérisé en ce que**
les agents de mesure de l'intensité sont constitués de plusieurs guide-lumières et à chaque fois d'un élément électronique sensible à la lumière, qui y est optiquement couplé, les domaines sensibles à la lumière des conducteurs lumineux étant disposés à la surface du manteau de la tête de mesure de manière que grâce à cette disposition on puisse obtenir une définition supplémentaire en fonction de la profondeur de pénétration.

18. Dispositif selon une des revendications 11 à 17,
**caractérisé en ce que**
l'élément électronique sensible à la lumière est une photodiode (19).

19. Dispositif selon l'une des revendications 10 à 18,
**caractérisé en ce que**
les moyens pour introduction d'impulsions lumineuses sont une diode laser couplée par l'intermédiaire d'un guide-onde lumineuse avec les moyens de mesure de l'intensité.

20. Dispositif selon l'une des revendications 9 à 19,
**caractérisé en ce que**
la tête de mesure est formée en tête de mesure jetable prévue pour une seule utilisation.

21. Dispositif selon l'une des revendications 9 à 20,
**caractérisé en ce que**
la tête de mesure comprend sur un côté frontal des moyens de couplage optique et/ou électrique ainsi que mécanique à une extrémité d'une sonde portant la tête de mesure au cours d'une opération de mesure.

22. Dispositif selon la revendication 21,
**caractérisé en ce que**
la sonde comprend un tube de carton extérieur dans la surface du manteau est au moins environné d'un tube de protection contre les projections sur la zone portant la tête de mesure.

23. Dispositif selon la revendication 21 ou 22,
**caractérisé en ce que**
la sonde à l'extrémité frontale faisant face à la tête de mesure, est reliée par un moyen optique et/ou électrique ainsi que mécanique à une lance qui représente une liaison mécanique avec un dispositif pour abaisser la sonde dans la masse fondue ainsi que la liaison optique et/ou électrique avec l'électronique des variations disposées à la suite.

24. Dispositif selon l'une des revendications 9 à 23,
**caractérisé en ce qu'**
en outre un dispositif de mesure de la température est prévu dans la sonde.
